# EUROPEAN PATENT APPLICATION

(11) **EP 1 564 276 A1**
(43) Date of publication of application: **17.08.2005**
(21) Application number: 03770011.9
(22) Date of filing: 30.10.2003
(51) Int. Cl.: C09K 3/00, C08F 20/44, B01J 13/16

(54) **HEAT-EXPANDABLE MICROCAPSULES**

(30) Priority: 08.11.2002 JP 2002325569
(71) Applicant: SEKISUI CHEMICAL CO., LTD., Osaka-shi, Osaka 530-8565 (JP)
(72) Inventor: Yamauchi, Hiroshi, Sekisui Chemical Co., Ltd., Shunan-shi, Yamaguchi 746-0006 (JP)
(74) Representative: Hart Davis, Jason
(86) International application number: PCT/JP2003/013906
(87) International publication number: WO 2004/041955

(57) **Abstract**

It is an object of the present invention to provide a thermally expandable microcapsule, which can be thermally expanded at low temperatures and in which an expanded microcapsule is resistant to shrink at high temperatures.

The present invention pertains to a thermally expandable microcapsule, which contains a shell polymer and a volatile expanding agent becoming gaseous at a temperature not higher than a softening point of said shell polymer, in which said shell polymer contains a nitrile monomer component in an amount 70% by weight or more and a content of an acrylonitrile component in said nitrile monomer component is 40 to 85% by weight, and the volatile expanding agent contains a volatile expanding agent having a branched-chain structure or a cyclic structure in an amount 30% by weight or more.

## Description

### TECHNICAL FIELD

The present invention relates to a thermally expandable microcapsule which can be thermally expanded at low temperatures and in which an expanded microcapsule is resistant to shrink at high temperatures.

### BACKGROUND ART

As for thermally expandable microcapsules, their applications are broadened to various fields such as coating materials aimed at weight reduction and fillers for plastics. The thermally expandable microcapsules are generally ones formed by encapsulating a volatile expanding agent into a microcapsule with a thermoplastic resin. Such a thermally expandable microcapsule has been produced by a method of performing suspension polymerization of a polymerizable mixture, which contains at least an expanding agent and a polymerizable monomer, in an aqueous dispersion medium. By this method, a shell is formed by a polymer which is produced as a polymerization reaction proceeds, and a volatile expanding agent is encapsulated in this shell to obtain a thermally expandable microcapsule.

In recent years, it is required to thermally expand at lower temperatures in application as a thermally expandable microcapsule alone and also in application as a material for a coating material containing thermally expandable microcapsules. As a method of obtaining a thermally expandable microcapsule expanding at low temperature, there are known a method of using a solvent with a low boiling point as a volatile expanding agent and a method of using a polymerizable monomer which will reduce in a glass transition temperature (Tg) of the polymer.

And, when the microcapsule is thermally expanded by heating in an oven or the like, since there was essentially unevenness in temperature, there was a problem that the expanded microcapsule at only portion subjected to elevated temperatures will shrink again, that is, the so-called "deflation" is occurred.

Further, there was a problem that there was unevenness in quality that a portion, which was low in temperature in heating, does not foam and therefore its yield was low. Particularly, conventional thermally expandable microcapsules thermally expanding at low temperatures have a remarkable problem that in such an application that only an end face of a material is elevated to high temperature, the "deflation" of an expanded microcapsule is apt to occur.

As a thermally expandable microcapsule which has excellent heat resistance, there is disclosed a thermally expandable microcapsule, in which a polymer, obtained from a component containing a nitrile-based monomer in an amount 80% by weight or more, a non-nitrile-based monomer in an amount 20% by weight or less and a crosslinking agent in an amount 0.1 to 1% by weight, is used and a volatile expanding agent, which becomes gaseous at a temperature not higher than a softening point of the polymer, is encapsulated to form a microcapsule, for example, in Japanese Patent No. 2894990. However, this thermally expandable microcapsule had a problem that it could not be foamed at low temperatures though it had high heat resistance.

### SUMMARY OF THE INVENTION

It is an object of the present invention to provide a thermally expandable microcapsule which can be thermally expanded at low temperatures and in which an expanded microcapsule is resistant to shrink at high temperatures.

The present invention pertains to a thermally expandable microcapsule, which contains a shell polymer and a volatile expanding agent becoming gaseous at a temperature not higher than a softening point of said shell polymer, in which said shell polymer contains a nitrile monomer component in an amount 70% by weight or more and a content of an acrylonitrile component in said nitrile monomer component is 40 to 85% by weight, and the volatile expanding agent contains a volatile expanding agent having a branched-chain structure or a cyclic structure in an amount 30% by weight or more.

### DETAILED DESCRIPTION OF THE INVENTION

Hereinafter, the present invention will be described in detail.

A thermally expandable microcapsule of the present invention contains a shell polymer and a volatile expanding agent.

The present inventors thought that when conventional thermally expandable microcapsules, which can be thermally expanded at low temperatures, are subjected to elevated temperatures, since the volatile expanding agents thereof escape from the shell polymer and the microcapsules are deflated, the "deflations" are occurred. Therefore, in order to make the volatile expanding agent resistant to escaping from the shell polymer, the present inventors thought the following means;
1) selecting a molecule having a bulky steric structure as a volatile expanding agent, and
2) enhancing a gas-barrier property of a shell polymer.

That is, in the thermally expandable microcapsule of the present invention, not a volatile expanding agent, comprising only a straight-chain molecule such as n-pentane, n-hexane, but a volatile expanding agent, comprising a volatile expanding agent having a branched-chain structure or a cyclic structure such as isobutane, isopentane, neopentane, isohexane, cyclohexane, is employed as the above-mentioned volatile expanding agent. And, as the shell polymer, there is used a compound having a high content of nitrile type monomer component such as acrylonitrile or methacrylonitrile.

Even though the volatile expanding agent has a so bulky steric structure, the volatile expanding agent only escapes from the shell polymer and cannot expand the thermally expandable microcapsule of the present invention if the shell polymer is not high in the gas-barrier property. On the other hand, even though the shell polymer has the high gas-barrier properties, if the volatile expanding agent has a structure of being apt to escape from the shell polymer, the volatile expanding agent escapes from the shell polymer which has been heated to elevated temperature and softened and the microcapsule is deflated. Further, generally, the volatile expanding agent having a branched-chain structure or a cyclic structure has a lower boiling point than the volatile expanding agent having a straight-chain structure. Accordingly, such a volatile expanding agent is favorable in the case where it is desired to expand the thermally expandable microcapsule of the present invention at low temperatures.

The present inventors have found, as a result of studying, that when as a shell polymer, a polymer, which contains a nitrile type monomer component in an amount 70% by weight or more and in which a content of an acrylonitrile component in the nitrile type monomer component is 40 to 85% by weight, is employed and as a volatile expanding agent, a compound, which contains a volatile expanding agent having a branched-chain structure or a cyclic structure in an amount 30% by weight or more, is employed, a thermally expandable microcapsule, which can be thermally expanded at low temperatures and in which an expanded microcapsule is resistant to shrink at high temperatures, can be obtained. These findings have led to completion of the present invention.

The above-mentioned nitrile type monomer component is not particularly limited and includes a component comprising acrylonitrile, methacrylonitrile, α-chloroacrylonitrile, α-ethoxyacrylonitrile or fumaronitrile. Among others, acrylonitrile or methacrylonitrile is suitable.

The content of the nitrile type monomer component of the above-mentioned shell polymer is 70% by weight or more. When this content is less than 70% by weight, the gas-barrier properties of the shell polymer is deteriorated and therefore in a thermally expandable microcapsule to be obtained, the "deflation" will be occurred at high temperatures. This content is preferably 80% by weight.

And, the content of the acrylonitrile component in the above-mentioned nitrile type monomer is 40 to 85% by weight. When the above-mentioned content is out of this range, the gas-barrier property of the shell polymer is deteriorated and therefore in thermally expandable microcapsules to be obtained, the "deflation" will be occurred at high temperatures. It is necessary to realize the compatibility between using a monomer yielding a polymer which is high in the gas-barrier property and attaining a high polymerization degree so that the shell polymer may exert the high gas-barrier property. The gas-barrier property of polyacrylonitrile alone is lower than that of a polymer consisting of another nitrile type monomer such as methacrylonitrile. However, while the another nitrile type monomer is low in a polymerization efficiency and hard to attain a high polymerization degree, acrylonitrile is relatively high in reactivity and easy to attain a high polymerization degree. Therefore, it is thought that when the content of the acrylonitrile component is within a specific range, namely a range of 40 to 85% by weight, a shell polymer having a notably high gas-barrier property is obtained. This content is preferably 50 to 70% by weight and more preferably 55 to 65% by weight.

The above-mentioned non-nitrile type monomer composing the shell polymer is not particularly limited but a component consisting of at least one selected from the group consisting of styrene, α-methyl styrene, vinyl acetate, methacrylic acid esters and acrylic acid esters is preferred. Among others, vinyl acetate is more suitable.

And, the above-mentioned shell polymer may have a component comprising of a crosslinkable monomer as required. As the above-mentioned crosslinkable monomer, there are given, for example, divinylbenzene, ethylene glycol dimethacrylate, triethylene glycol dimethacrylate, triacrylformal, trimethylol propane trimethacrylate, allyl methacrylate, 1,3-butyl glycol dimethacrylate, triallyl isocyanate, dipentaerythritol hexaacrylate, etc. Among others, trimethylol propane trimethacrylate and dipentaerythritol hexaacrylate are suitable. The content of the component comprising of these crosslinkable monomers is preferably 0.1 to 1% by weight.

A method of synthesizing the above-mentioned shell polymer is not particularly limited since it may be formed by polymerizing the above-mentioned monomers, respectively, by a conventional method publicly known. In polymerizing, an initiator is used as required. The above-mentioned shell polymer is prepared by appropriately blending the initiator. As a suitable polymerization initiator, there are given, for example, azobisisobutyronitrile, benzoyl peroxide, lauroyl peroxide, diisopropyl peroxydicarbonate, tert-butyl peroxide, 2,2'-azobis(2,4-dimethylvaleronitrile), tert-butyl peroxypivalate, di-sec-butyl peroxydicarbonate and di-tert-butyl peroxyhexahydroterephthalate.

The above-mentioned volatile expanding agent is not particularly limited as long as it is a substance which becomes gaseous at a temperature not higher than a softening point (generally, about 120 to 150°C) of the above-mentioned shell polymer, and includes, for example, propane, propylene, n-butane, isobutane, butene, n-pentane, isopentane, neopentane, n-hexane, isohexane, cyclohexane, heptane, 2,2-dimethylhexane and petroleum ethers; halides of methane such as methyl chloride, methylene chloride, CCl₃F, CCl₂F₂ and the like; and the liquids with a low boiling point like tetraalkylsilane such as tetramethylsilane, trimethylethylsilane, and the compounds such as azoisobutyronitrile (AIBN), which is decomposed by heat and becomes gaseous.

The above-mentioned volatile expanding agent contains a volatile expanding agent having a branched-chain structure or a cyclic structure in an amount 30% by weight or more. When this content is less than 30% by weight, the "deflation" will be occurred in the thermally expandable microcapsule when subjected to elevated temperatures. This content is preferably 50% by weight or more and more preferably 80% by weight or more.

As the above-mentioned volatile expanding agent having a branched-chain structure or a cyclic structure, there are given volatile expanding agents having a bulky steric structure, such as isobutane, isopentane, neopentane, isohexane, cyclohexane, 2,2-dimethylhexane.

A method of producing the thermally expandable microcapsule of the present invention is not particularly limited. As a particularly suitable method, there is given, for example, a method of mixing a monomer, a crosslinking agent, a volatile expanding agent and a polymerization initiator and dispersing these compounds in an aqueous medium to perform suspension polymerization as described in Japanese Kokoku Publication Sho-42-26524.

The above-mentioned aqueous medium used in the suspension polymerization is not particularly limited but deionized water is preferred, and in this case, it is preferred to adjust the pH of the solution at about 3 to 4 by adding an acid. To the above-mentioned aqueous medium, there may be added, for example, an inorganic dispersant such as silica, calcium phosphate, calcium carbonate, sodium chloride, sodium sulfate or an organic dispersant such as a condensate of diethanolamine and adipic acid, gelatin, methyl cellulose, polyvinyl alcohol, polyethylene oxide, dioctyl sulfosuccinate, sorbitan ester.

### BEST MODES FOR CARRYING OUT THE INVENTION

Hereinafter, the present invention will be described in more detail by way of examples, but the present invention is not limited to these examples.

### (Example 1)

An oil phase comprising of 51 parts by weight of acrylonitrile, 45 parts by weight of methacrylonitrile, 1 part by weight of methyl methacrylate, 3 parts by weight of vinyl acetate, 0.17 parts by weight of dipentaerythritol hexaacrylate, 25 parts by weight of isopentane, 1 part by weight of tert-butyl peroxypivalate, 0.3 parts by weight of di-sec-butyl peroxydicarbonate and 1.2 parts by weight of di-tert-butyl peroxyhexahydroterephthalate was prepared. Next, there was prepared a water phase comprising of 7,300 parts by weight of deionized water, 1,260 parts by weight of a colloidal silica dispersion (solid matter content 20%), 45 parts by weight of potassium dichromate (2.5% aqueous solution), 8 parts by weight of polyvinylpyrrolidone, 2,200 parts by weight of sodium chloride and 8.5 parts by weight of 35% hydrochloric acid.

After mixing all the above-mentioned oil phase and the above-mentioned water phase, the mixture was mixed for 5 minutes at 6,000 rpm with a homogenizer and reacted at 60°C for 20 hours in pressurization of 4 to 5 kg/cm² to obtain thermally expandable microcapsules. After pre-dewatering with a centrifuge, the obtained thermally expandable microcapsules were dried in a static drier maintained at 40°C to obtain powder thermally expandable microcapsules.

### (Examples 2 to 7)

Thermally expandable microcapsules were prepared by following the same procedure as in Example 1 except for changing the proportions of monomers and volatile expanding agents to those shown in Table 1.

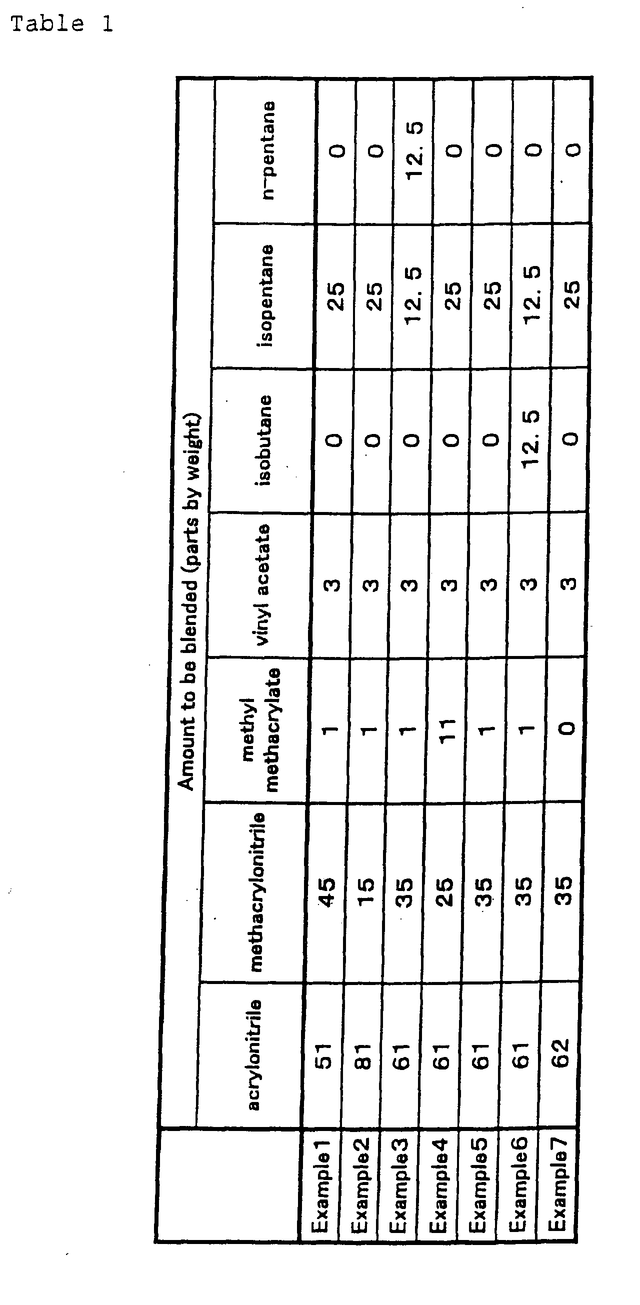

### (Comparative Example 1)

Into a polymerization reactor equipped with a stirrer, 100 parts by weight of deionized water and 15 parts by weight of a colloidal silica dispersion (solid matter content 30% by weight) were charged and to this, 2.5 parts by weight of a condensate (10% aqueous solution) of diethanolamine and adipic acid was added. After adding potassium dichromate (2.5% aqueous solution) to this mixture, the resulting mixture was adjusted at pH 4 to prepare a water phase. Next, 100 parts by weight of methyl methacrylate containing neopentane in an amount 20% by weight and 0.1 parts by weight of benzoyl peroxide were mixed to prepare an oil phase.

This oil phase was added to the water phase, and the mixture was reacted while being stirred, and then the reactant was filtered and a thermally expandable microcapsule was taken out.

### (Comparative Example 2)

Into a polymerization reactor equipped with a stirrer, 100 parts by weight of deionized water and 15 parts by weight of a colloidal silica dispersion (solid matter content 30% by weight) were charged and to this, 2.5 parts by weight of a condensate (10% aqueous solution) of diethanolamine and adipic acid was added. After adding potassium dichromate (2.5% aqueous solution) to this mixture, the resulting mixture was adjusted at pH 4 to prepare a water phase. Next, a mixture of 90 parts by weight of methyl methacrylate containing neohexane in an amount 20% by weight, 10 parts by weight of acrylonitrile (VCN) and 0.025 parts by weight of divinyl benzene and 0.1 parts by weight of benzoyl peroxide were mixed to prepare an oil phase.

This oil phase was added to the water phase, and the mixture was reacted while being stirred, and then the reactant was filtered and a thermally expandable microcapsule was taken out.

### (Comparative Example 3)

Into a polymerization reactor equipped with a stirrer, 100 parts by weight of deionized water and 15 parts by weight of a colloidal silica dispersion (solid matter content 30% by weight) were charged and to this, 2.5 parts by weight of a condensate (10% aqueous solution) of diethanolamine and adipic acid was added. After adding potassium dichromate (2.5% aqueous solution) to this mixture, the resulting mixture was adjusted at pH 4 to prepare a water phase. Next, a mixture of 50 parts by weight of methyl methacrylate containing neohexane in an amount 20% by weight, 50 parts by weight of acrylonitrile and 0.025 parts by weight of divinyl benzene and 0.1 parts by weight of benzoyl peroxide were mixed to prepare an oil phase.

This oil phase was added to the water phase, and the mixture was reacted while being stirred, and then the reactant was filtered and a thermally expandable microcapsule was taken out.

### (Comparative Example 4)

An oil phase formed by mixing 2,450 parts by weight of acrylonitrile, 400 parts by weight of methyl methacrylate, 9 parts by weight of triacrylformal, 550 parts by weight of n-pentane and 15 parts by weight of azobisisobutyronitrile, and a water phase formed by mixing 6,300 parts by weight of deionized water, 1,080 parts by weight of a colloidal silica dispersion (solid matter content 20%, produced by NISSAN CHEMICAL INDUSTRIES, LTD.), 30 parts by weight of potassium dichromate (2.5% aqueous solution), 40 parts by weight of a condensate (50% aqueous solution, acid value 100 mg KOH/g) of diethanolamine and adipic acid, and 2,200 parts by weight of sodium chloride and adding 1.5 parts by weight of 35% hydrochloric acid to this mixture to adjust at pH 3.2 were stirred and mixed for 60 seconds at 10,000 rpm with a HOMO MIXER (manufactured by Tokushu Kika Kogyo Co,.Ltd.) while being pressurized to 2 kg/m² in an atmosphere of nitrogen, and then the mixture was charged into a 15 liter pressurized polymerization reactor replaced with nitrogen gas and pressurized to 2 kg/m² and reacted at 60°C for 20 hours.

The reactant was water washed and centrifuged several times and then dewatered to obtain a wet cake having a water content of 32%, which contains thermally expandable microcapsules. Next, this cake was dried in air for a day to obtain thermally expandable microcapsules having an average particle size of 21.4 µm.

### (Comparative Example 5)

600 parts by weight of deionized water, 100 parts by weight of a colloidal silica dispersion (solid matter content 20%) and 5 parts by weight of a condensate (50% aqueous solution) of diethanolamine and adipic acid were mixed and a water phase of pH 3 was prepared using sulfuric acid. An oil phase comprising 150 parts by weight of acrylonitrile, 60 parts by weight of methyl methacrylate, 40 parts by weight of methyl acrylate, 45 parts by weight of isobutane, 25 parts by weight of n-pentane and 5 parts by weight of diisopropyl peroxydicarbonate was prepared. Suspension polymerization of this oil phase was performed in the water phase to obtain thermally expandable microcapsules having an average particle size of 16.1 µm.

### (Comparative Example 6)

An oil phase comprising 60 parts by weight of acrylonitrile, 150 parts by weight of vinylidene chloride, 40 parts by weight of methyl methacrylate, 55 parts by weight of isobutane, 15 parts by weight of n-pentane and 5 parts by weight of diisopropyl peroxydicarbonate was prepared, and suspension polymerization of this oil phase was performed in the water phase prepared in Comparative Example 5 to obtain thermally expandable microcapsules having an average particle size of 11.7 µm.

### (Evaluation)

The thermally expandable microcapsules prepared in Examples 1 to 7 and Comparative Examples 1 to 7 were evaluated by the following method.

The results are shown in Table 2.

Here, nitrile content in Table 2 represents the content of a nitrile type monomer component in a shell polymer by % by weight. And, acrylonitrile content in Table 2 represents the content of an acrylonitrile component in a nitrile type monomer component by % by weight. Further, content of volatile expanding agent having branched-chain structure or cyclic structure represents the content of a volatile expanding agent having a branched-chain structure or a cyclic structure in a volatile expanding agent by % by weight.

### (1) Evaluation method of foaming starting temperature, expanding property and "deflation" at high temperatures

Using a thermomechanical analysis apparatus (2940 TMA manufactured by TA Instruments), 250 µg of a thermally expandable microcapsule was put in an aluminum cylindrical cup of 7 mm in diameter and 1 mm in depth and a vertical displacement of a pressurizing terminal in heating at a temperature rise rate of 5°C/minute from 80°C to 220°C with a force of 0.1 N being applied from above was measured. Here, a temperature at which the displacement is begun to be observed is regarded as a foaming starting temperature.

The expanding property of the thermally expandable microcapsule was evaluated from the obtained maximum displacement according to the following criteria.
Evaluation criteria of the expanding property
ⓞ: maximum displacement is 800 µm or larger
○: maximum displacement is 500 µm or larger and less than 800 µm
Δ: maximum displacement is 100 µm or larger and less than 500 µm
×: maximum displacement is less than 100 µm

Further, a degree of the "deflation" of the thermally expandable microcapsule at high temperatures was evaluated from the displacement at 170°C according to the following criteria.
Evaluation criteria of the "deflation" at high temperatures
ⓞ: displacement at 170°C is 500 µm or larger
○: displacement at 170°C is 300 µm or larger and less than 500 µm
Δ: displacement at 170°C is 100 µm or larger and less than 300 µm
×: displacement at 170°C is less than 100 µm

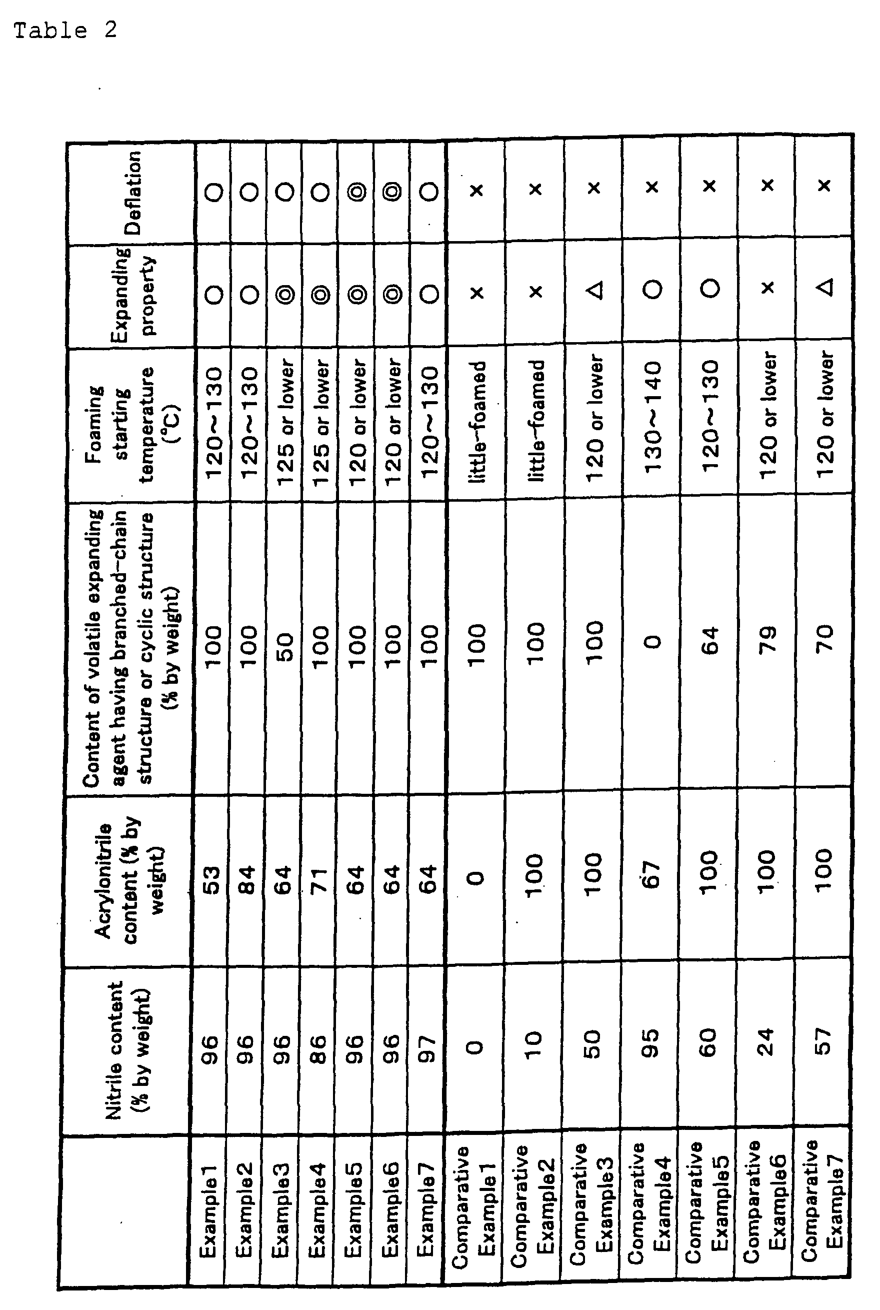

It is found from Table 2 that the thermally expandable microcapsules prepared in Examples 1 to 7 could be thermally expanded even at low temperatures and had a high expansion ratio. And, these microcapsules did not occur the "deflation" at high temperatures. Therefore, it was verified that these microcapsules could attain the high expansion ratio over a wide range temperature of from low temperature to high temperature.

On the other hand, the thermally expandable microcapsules prepared in Comparative Examples 1, 2 and 6 hardly had the gas-barrier property of the shell polymer and hardly expanded since they did not contain the nitrile type monomer component or they contained a little nitrile type monomer component.

And, the thermally expandable microcapsules prepared in Comparative Examples 3 and 7 were low in the gas-barrier properties of the shell polymer due to a less nitrile type monomer component and a low proportion of acrylonitrile component in the nitrile type monomer component, and therefore it had a low expansion ratio and occurred the "deflation" at high temperatures, although the microcapsules were thermally expanded at low temperatures.

In the thermally expandable microcapsule prepared in Comparative Example 4, the volatile expanding agent has a molecule, the bulk of which was not large since the volatile expanding agent comprises only a straight-chain molecule, and therefore the volatile expanding agent was apt to escape from the shell polymer, hardly thermally expanded at low temperatures and occurred the "deflation" at high temperatures.

The thermally expandable microcapsule prepared in Comparative Example 5 was not high in the gas-barrier property of shell polymer and occurred the "deflation" at high temperatures because a ratio of the acrylonitrile component to the nitrile type monomer component is high and another nitrile components enhancing the gas-barrier property became less.

### INDUSTRIAL APPLICABILITY

In accordance with the present invention, the thermally expandable microcapsule, which can be thermally expanded at low temperatures and in which an expanded microcapsule is resistant to shrink at high temperatures, can be provided.

## Claims

1. A thermally expandable microcapsule,
which contains a shell polymer and a volatile expanding agent becoming gaseous at a temperature not higher than a softening point of said shell polymer, said shell polymer containing a nitrile monomer component in an amount 70% by weight or more and a content of an acrylonitrile component in said nitrile monomer component being 40 to 85% by weight, and the volatile expanding agent containing a volatile expanding agent having a branched-chain structure or a cyclic structure in an amount 30% by weight or more.
